# EUROPEAN PATENT APPLICATION

(11) **EP 4 604 147 A1**
(43) Date of publication of application: **20.08.2025**
(21) Application number: 23877045.7
(22) Date of filing: 04.09.2023
(51) Int. Cl.: H01F 30/10, H02M 3/28

(54) **TRANSISTOR AND ELECTRIC POWER SUPPLY DEVICE**

(30) Priority: 11.10.2022 JP 2022163215
(71) Applicant: Panasonic Intellectual Property Management Co., Ltd., Kadoma-shi, Osaka 571-0057 (JP)
(72) Inventor: FUJIMURA, Motohiko, Kadoma-shi, Osaka 571-0057 (JP); HOSOI, Hiroyuki, Kadoma-shi, Osaka 571-0057 (JP)
(74) Representative: Novagraaf International SA
(86) International application number: PCT/JP2023/032256
(87) International publication number: WO 2024/080038

(57) **Abstract**

A transformer (10) is a transformer used in unidirectional or bidirectional conversion of electric power, the transformer including a plurality of magnetic cores, a first winding (21) connected to a primary side circuit (41), a second winding (22) connected to a secondary side circuit (42), a resonance capacitor (3), and a third winding (23). The third winding (23) is connected to resonance capacitor (3) in series within the transformer (10) to form a closed circuit. The first winding (21), the second winding (22), and the third winding (23) are wound around one or more magnetic cores among the plurality of magnetic cores.

## Description

### [Technical Field]

The present disclosure relates to a transformer and a power supply device.

### [Background Art]

Patent Literature (PTL) 1 discloses a current resonance switching power supply.

### [Citation List]

### [Patent Literature]

[PTL 1] Japanese Unexamined Patent Application Publication No. H11-356044

### [Summary of Invention]

### [Technical Problem]

The present disclosure provides a transformer that can facilitate a size reduction in power supply device including a transformer, and a power supply device.

### [Solution to Problem]

The transformer according to one aspect of the present disclosure is a transformer used in unidirectional or bidirectional conversion of electric power, the transformer including a plurality of magnetic cores; a first winding connected to a primary side circuit; a second winding connected to a secondary side circuit; a resonance capacitor; and a third winding connected to the resonance capacitor in series within the transformer to form a closed circuit. Here, the first winding, the second winding, and the third winding are wound around one or more magnetic cores among the plurality of magnetic cores.

The power supply device according to one aspect of the present disclosure includes the transformer; the primary side circuit as a bridge circuit connected to the first winding; and the secondary side circuit as a bridge circuit connected to the second winding. Here, at least one of the primary side circuit or the secondary side circuit includes a plurality of switching elements.

### [Advantageous Effects of Invention]

The transformer according to one aspect of the present disclosure is advantageous in that a size reduction in power supply device including a transformer is facilitated.

### [Brief Description of Drawings]

[FIG. 1]

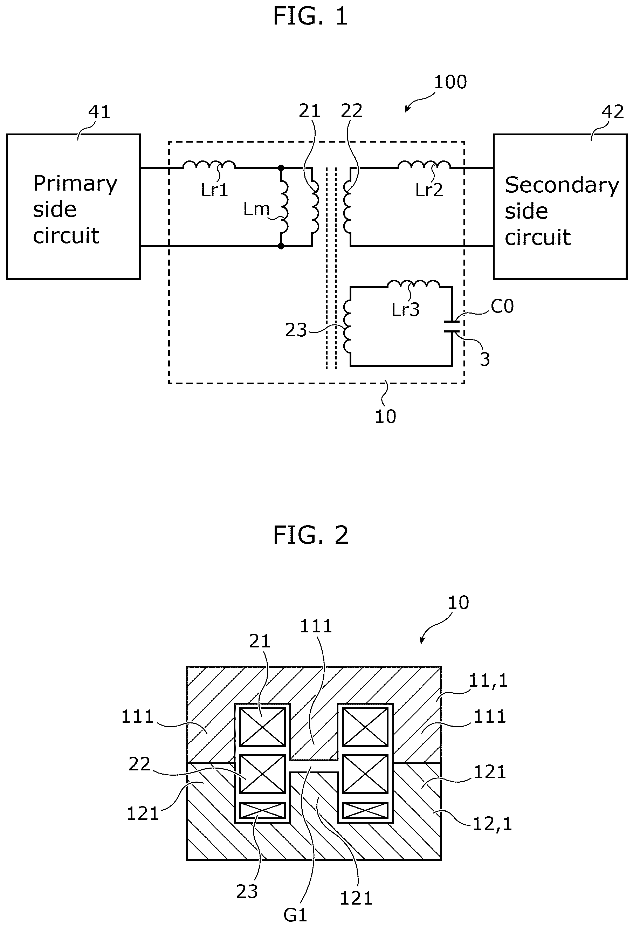

   FIG. 1 is a circuit diagram illustrating a schematic configuration of the power supply device according to an embodiment.
[FIG. 2]
   FIG. 2 is a cross-sectional view illustrating a schematic configuration of the transformer according to the embodiment.
[FIG. 3]

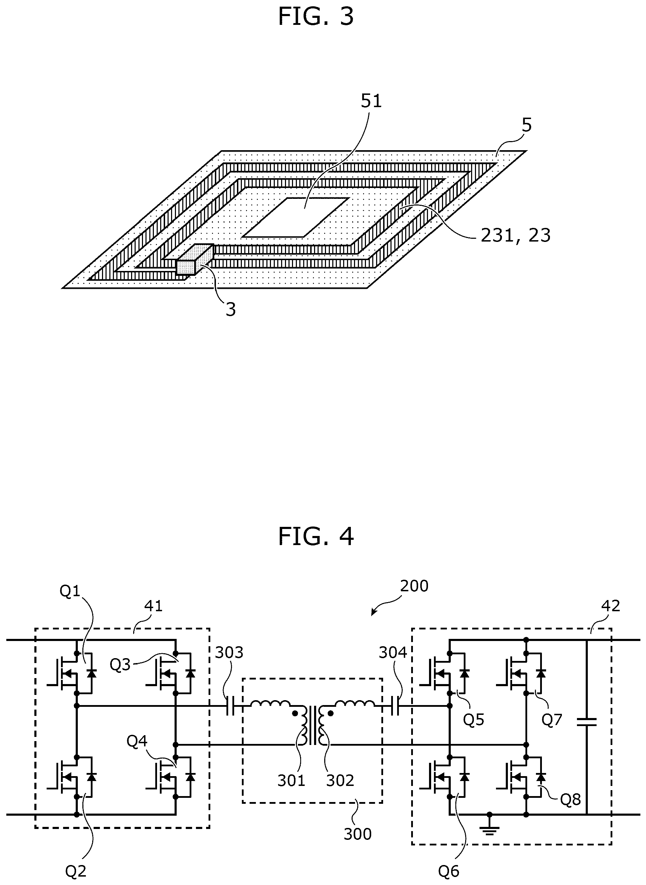

   FIG. 3 is a diagram illustrating a schematic configuration of a third winding and a resonance capacitor.
[FIG. 4]
   FIG. 4 is a circuit diagram illustrating a schematic configuration of a power supply device in Comparative Example.
[FIG. 5]

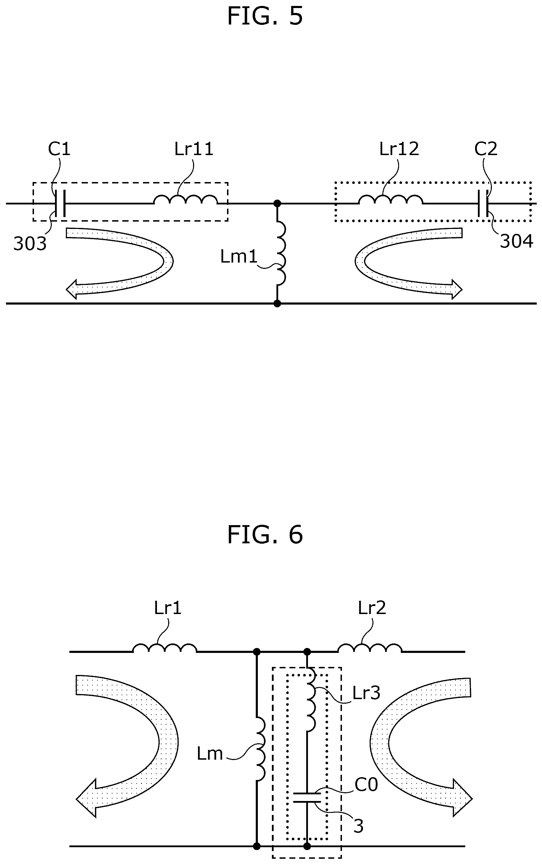

   FIG. 5 is a diagram illustrating an equivalent circuit including the transformer in Comparative Example and two resonance capacitors.
[FIG. 6]
   FIG. 6 is a diagram illustrating an equivalent circuit of the transformer according to the embodiment.
[FIG. 7]

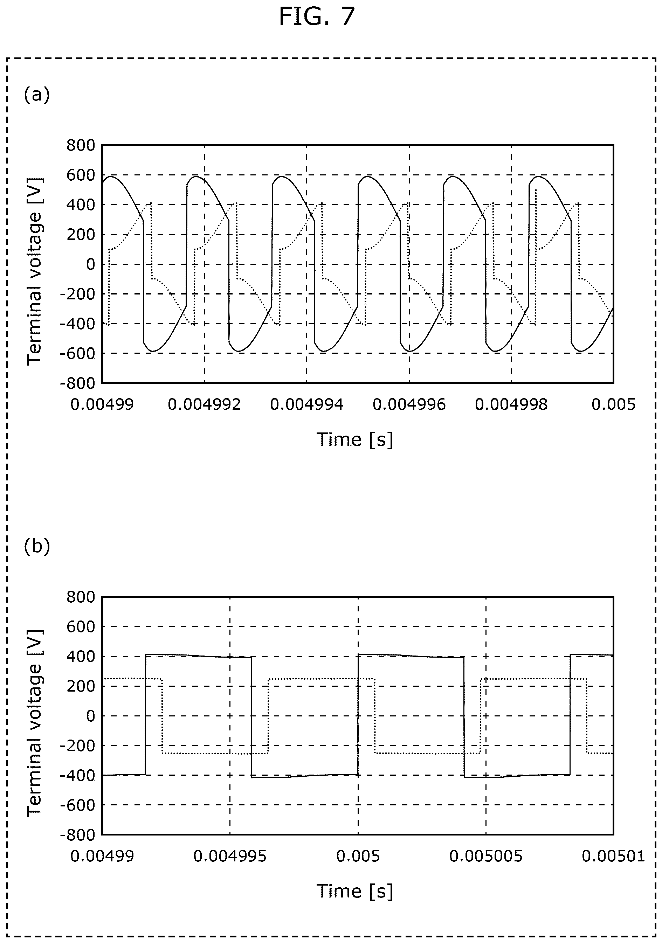

   FIG. 7 is a diagram illustrating the results of comparison between the power supply device according to the embodiment and the power supply device in Comparative Example.
[FIG. 8]

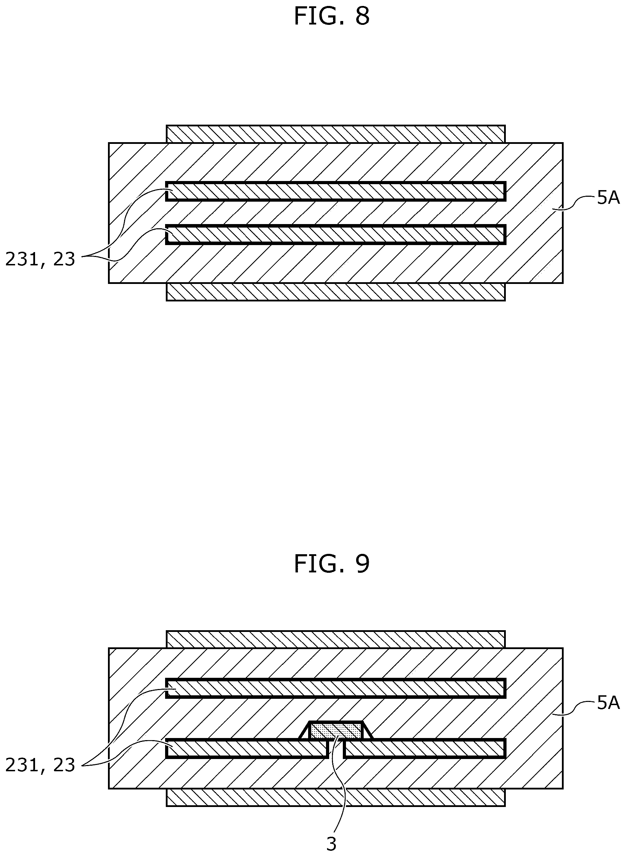

   FIG. 8 is a diagram illustrating a schematic configuration of a modification of the third winding.
[FIG. 9]
   FIG. 9 is a diagram illustrating a schematic configuration of a modification of the third winding and the resonance capacitor.
[FIG. 10]

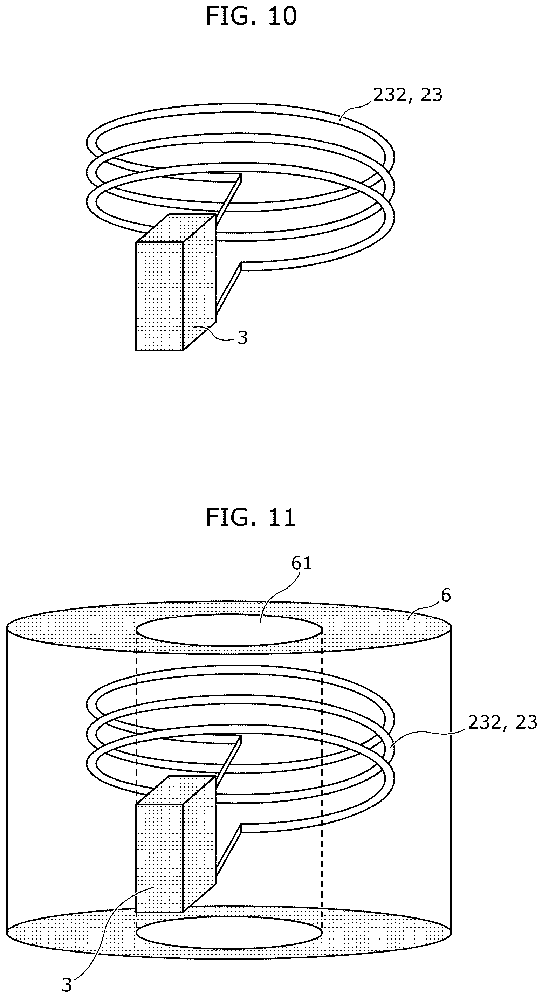

   FIG. 10 is a diagram illustrating a schematic configuration of another modification of the third winding and the resonance capacitor.
[FIG. 11]
   FIG. 11 is a diagram illustrating a schematic configuration of further another modification of the third winding and the resonance capacitor.
[FIG. 12]

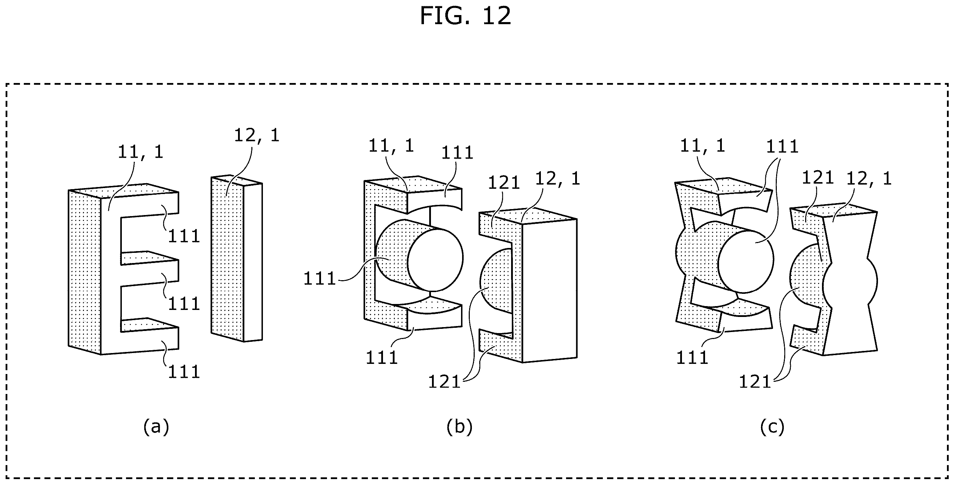

   FIG. 12 is a diagram illustrating schematic configurations of modifications of a plurality of magnetic cores.
[FIG. 13]

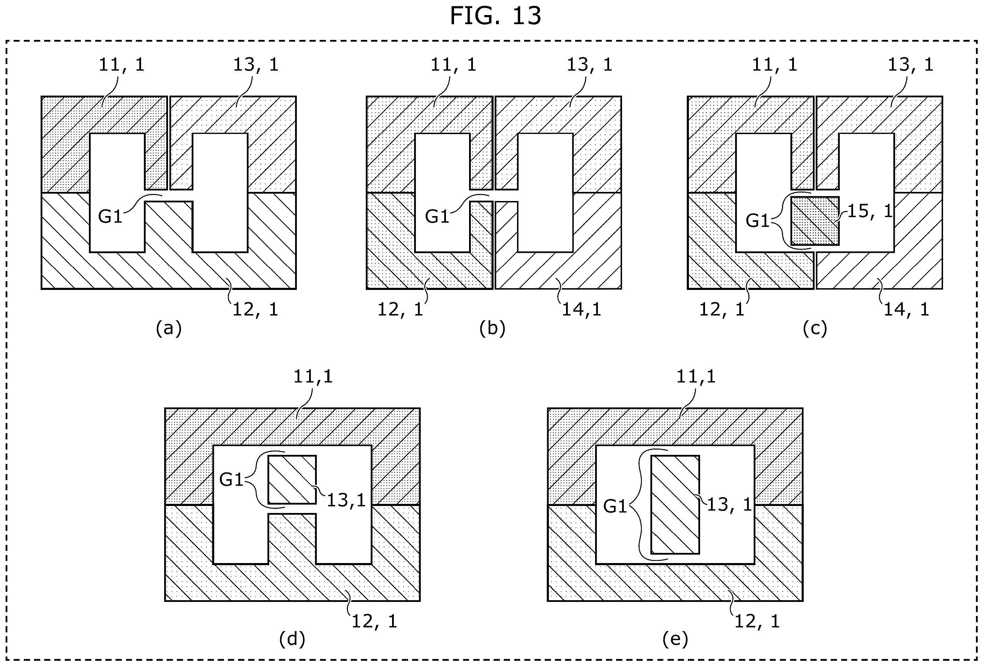

   FIG. 13 is a diagram illustrating schematic configurations of other modifications of a plurality of magnetic cores.
[FIG. 14]

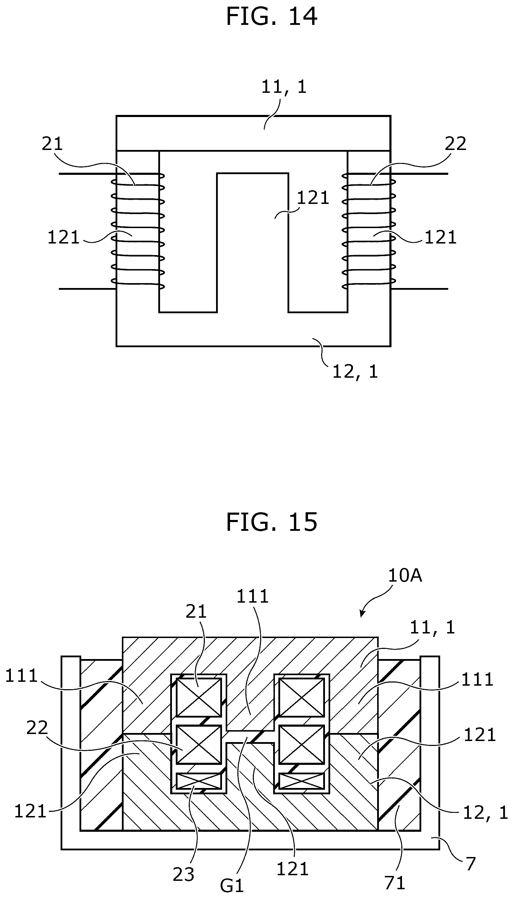

   FIG. 14 is a diagram illustrating a schematic configuration of a modification of the first winding and the second winding.
[FIG. 15]
   FIG. 15 is a cross-sectional view illustrating a schematic configuration of the transformer according to a first modification of the embodiment.
[FIG. 16]

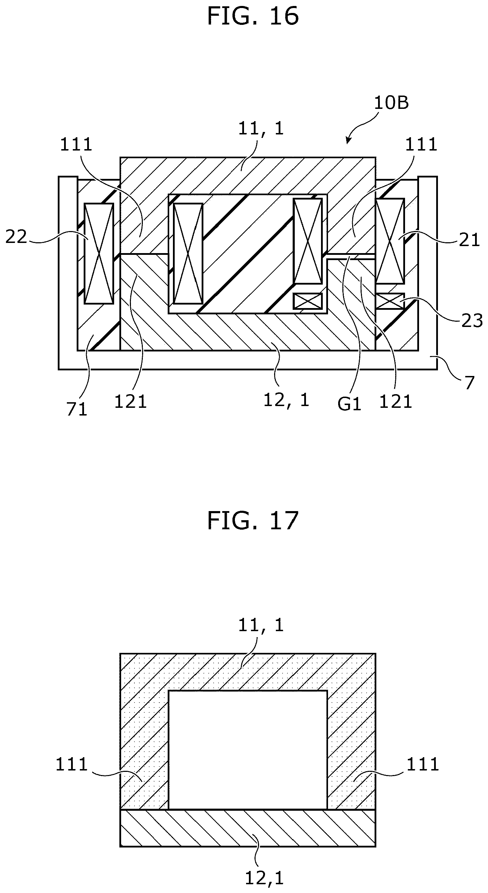

   FIG. 16 is a cross-sectional view illustrating a schematic configuration of the transformer according to a second modification of the embodiment.
[FIG. 17]
   FIG. 17 is a diagram illustrating a schematic configuration of a modification of a plurality of magnetic cores.

### [Description of Embodiments]

### (Underlying Knowledge Forming Basis of the Present Disclosure)

Initially, the viewpoint of the inventor will be described below.

To improve conversion efficiency of a bidirectional power supply device that increases or reduces the input voltage from one of the primary side circuit or the secondary side circuit and bidirectionally outputs the input voltage to the other of the circuits, a CLLC current resonance power supply is used, the CLLC current resonance power supply including a plurality of switching elements, a transformer, an inductor and a capacitor arranged on a primary side of the transformer, and an inductor and a capacitor arranged on a secondary side of the transformer.

In a traditional current resonance power supply, due to a resonance current that inverts between positive and negative directions of the current flowing through a switch element, loss in the switching element can be reduced by zero current switching (ZCS) performed by controlling the on/off switching timing of the switching element to the timing at which the flowing current reaches zero. Moreover, loss in the switching element can also be reduced by zero voltage switching (ZVS), in which by controlling the timing to turn on the switching element to a period in which the flowing current becomes negative, the switching element is caused to discharge the parasitic capacitance (output capacitance), so that the voltage applied to the switching element reaches zero.

Due to such a very small loss in the switching element during on/off switching, the current resonance power supply can drive the switching element at a high frequency. On the other hand, in the switching power supply including the switching elements, sizes of passive elements such as a transformer, an inductor, and a capacitor in the power supply device can be reduced by driving the switching elements at a high frequency. Accordingly, use of the current resonance power supply is effective in reducing the sizes of the transformer and the power supply device.

However, because the current resonance power supply uses a resonance current with a large amplitude, a very high voltage occurs in the transformer, the inductor, and the capacitor which constitute the resonance circuit. Thus, it is necessary to ensure long insulation distances within the resonance circuit between the resonance circuit and the primary side circuit and between the resonance circuit and the secondary side circuit for design of the structure within the power supply, which leads to difficulties in reducing the size of the power supply device. Moreover, the international standards by International Electrotechnical Commission (IEC) and the like specify that longer insulation distances should be ensured as not only the voltage between terminals but also the cycle of the voltage or the driving frequency of the power supply become higher. Due to such a requirement, even when the sizes of the passive elements within in the power supply device can be reduced by driving the switching elements at a high frequency, such size reductions still require an increase in insulation distances within the power supply device, which leads to difficulties in reducing the sizes of the transformer and the power supply device.

The inventor has created the present disclosure in consideration of such circumstances.

Hereinafter, embodiments will be specifically described with reference to the drawings.

The embodiments described below all illustrate general or specific examples. Numeric values, shapes, components, arrangement positions of components and connection forms thereof shown in the embodiments below are exemplary, and should not be construed as limitations to the present disclosure. Moreover, among the components of the embodiments below, the components not described in an independent claim will be described as optional components.

The drawings are schematic views, and are not necessarily precise illustrations. Accordingly, for example, scales and the like in the drawings are not always consistent. In the drawings, identical referential numerals are given in substantially identical configurations, and overlapping descriptions thereof will be omitted or simplified.

In this specification, terms representing relations between entities, such as orthogonal and parallel, terms representing shapes of entities, such as rectangular and circular, and numeric values and numeric value ranges are not expressions which represent only strict meanings, but are expressions meaning that these also include substantially equivalent ranges, e.g., differences of about several percent (such as about 10%).

### [Embodiment]

Hereinafter, transformer 10 and power supply device 100 according to an embodiment will be described. Power supply device 100 is a device that increases or decreases an input voltage to a predetermined voltage, and outputs the input voltage. For example, power supply device 100 is a unidirectional DC-to-DC converter that increases or decreases an input voltage from primary side circuit 41 (see FIG. 1) to a predetermined voltage, and outputs the input voltage to secondary side circuit 42 (see FIG. 1). Alternatively, for example, power supply device 100 is a bidirectional DC-to-DC converter that increases or decreases an input voltage from one of primary side circuit 41 or secondary side circuit 42, and outputs the input voltage to the other of the circuits. Here, power supply device 100 is described as a bidirectional DC-to-DC converter. Power supply device 100 is used to charge and discharge storage batteries by interchanging electric power between a storage battery provided in a residence and a storage battery provided in an electric vehicle, for example.

### [Configuration of power supply device]

Initially, the configuration of power supply device 100 according to an embodiment will be described with reference to FIG. 1. FIG. 1 is a circuit diagram illustrating a schematic configuration of power supply device 100 according to the embodiment. As illustrated in FIG. 1, power supply device 100 includes transformer 10, primary side circuit 41, and secondary side circuit 42. Although not illustrated, power supply device 100 may further include control circuits that control primary side circuit 41 and secondary side circuit 42, respectively. In other words, the control circuit may be a component in power supply device 100, or may not be a component.

In FIG. 1, "Lm" represents a magnetizing inductance, "Lr1" represents the leakage inductance of first winding 21, "Lr2" represents the leakage inductance of second winding 22, and "Lr3" represents the leakage inductance of third winding 23. "C0" represents the capacitance of resonance capacitor 3. In FIG. 1, illustration of winding resistance and stray capacity is omitted.

Primary side circuit 41 is a full bridge circuit including four switching elements Q1 to Q4 as in power supply device 200 in Comparative Example (see FIG. 4), which will be described later. In other words, primary side circuit 41 is a bridge circuit. Four switching elements Q1 to Q4 are all N-channel metal oxide semiconductor field effect transistors (MOSFETs). Primary side circuit 41 is configured with a serial circuit of switching elements Q1 and Q2 connected in parallel with a serial circuit of switching elements Q3 and Q4.

By controlling switching of switching elements Q1 to Q4 by the control circuit, primary side circuit 41 converts a DC voltage to an AC voltage, the DC voltage being input from a first external circuit (such as a storage battery) to primary side circuit 41, and outputs the AC voltage to transformer 10. By controlling switching of switching elements Q1 to Q4 by the control circuit, primary side circuit 41 converts the AC voltage output from transformer 10 to a DC voltage, and outputs the DC voltage to the first external circuit.

Secondary side circuit 42 is a full bridge circuit including four switching elements Q5 to Q8 as in power supply device 200 in Comparative Example (see FIG. 4), which will be described later. In other words, secondary side circuit 42 is a bridge circuit. Four switching elements Q5 to Q8 are all N-channel MOSFETs. Secondary side circuit 42 is configured with a serial circuit of switching elements Q5 and Q6 connected in parallel with a serial circuit of switching elements Q7 and Q8.

By controlling switching of switching elements Q5 to Q8 by the control circuit, secondary side circuit 42 converts a DC voltage to an AC voltage, the DC voltage being input from a second external circuit (such as a storage battery) to secondary side circuit 42, and outputs the AD voltage to transformer 10. By controlling switching of switching elements Q5 to Q8 by the control circuit, secondary side circuit 42 converts the AC voltage output from transformer 10 to a DC voltage, and outputs the DC voltage to the second external circuit.

As described above, in the embodiment, primary side circuit 41 as a bridge circuit and secondary side circuit 42 as a bridge circuit both include a plurality of switching elements.

### [Configuration of transformer]

Next, the configuration of transformer 10 according to the embodiment will be described with reference to FIGs. 1 and 2. FIG. 2 is a cross-sectional view illustrating a schematic configuration of transformer 10 according to the embodiment. Transformer 10 is used for unidirectional or bidirectional conversion of electric power. In the embodiment, transformer 10 is used for bidirectional conversion of electric power. As illustrated in FIGs. 1 and 2, transformer 10 includes a plurality of (here, two) magnetic cores 1, first winding 21, second winding 22, third winding 23, and resonance capacitor 3. Hereinafter, among two magnetic cores 1, one magnetic core 1 is also referred to as "first magnetic core 11", and the other thereof is also referred to as "second magnetic core 12".

First magnetic core 11 is formed from a magnetic material such as ferrite, includes three leg portions 111, and is formed into an E shape in a cross-sectional view. As in first magnetic core 11, second magnetic core 12 is formed from a magnetic material such as ferrite, includes three leg portions 121, and is formed into an E shape in a cross-sectional view. Three leg portions 111 in first magnetic core 11 and three leg portions 121 in second magnetic core 12 are arranged to align with each other. Thus, in the embodiment, first magnetic core 11 and second magnetic core 12 form so-called EE cores. Moreover, gap G1 is disposed between central leg portion 111 of three leg portions 111 in first magnetic core 11 and central leg portion 121 of three leg portions 121 in second magnetic core 12.

First winding 21 is connected to primary side circuit 41. In the embodiment, first winding 21 is configured with a conductive wire wound around central leg portion 111 in first magnetic core 11. Both ends of first winding 21 are connected to a pair of output terminals in primary side circuit 41, respectively, when the primary side is defined as an input (a pair of input terminals in primary side circuit 41 when the secondary side is defined as an input).

Second winding 22 is connected to secondary side circuit 42. In the embodiment, second winding 22 is configured with a conductive wire wound around central leg portions 111 and 121 in first magnetic core 11 and second magnetic core 12. Both ends of second winding 22 are connected to a pair of input terminals in secondary side circuit 42, respectively, when the primary side is defined as an input (a pair of output terminals in secondary side circuit 42 when the secondary side is defined as an input).

Third winding 23 is connected to resonance capacitor 3 in series within transformer 10 to form a closed circuit. As described later, the closed circuit configured with third winding 23 and resonance capacitor 3 functions as a resonance circuit on the primary side of transformer 10, and also functions as a resonance circuit in the secondary side of transformer 10.

In the embodiment, as illustrated in FIG. 3, third winding 23 is configured with conductive pattern 231 formed on substrate 5 having through hole 51. FIG. 3 is a diagram illustrating a schematic configuration of third winding 23 and resonance capacitor 3. Specifically, substrate 5 is a rectangular printed circuit board, for example, and includes rectangular through hole 51 penetrating the central portion thereof in the thickness direction. The surface of substrate 5 includes conductive pattern 231 disposed spirally around through hole 51 when viewed in the thickness direction of substrate 5. The shape of substrate 5 and the shape of through hole 51 are not limited to rectangular shapes, and can be any other shape such as a circular shape.

The initial end and the terminal end of conductive pattern 231 are connected to resonance capacitor 3. Thereby, conductive pattern 231 (third winding 23) is connected to resonance capacitor 3 in series. In the embodiment, resonance capacitor 3 is a surface mount-type capacitor, but the any other type of resonance capacitor can be used, and a lead terminal-type capacitor may be used, for example. Substrate 5 is disposed to allow a leg portion in one magnetic core 1 (here, central leg portion 121 in second magnetic core 12) among a plurality of magnetic cores 1 to be inserted into through hole 51. Thereby, conductive pattern 231 (third winding 23) is wound around magnetic core 1 (second magnetic core 12).

Here, the expression "third winding 23 is connected to resonance capacitor 3 in series within transformer 10 to form a closed circuit" means that third winding 23 and resonance capacitor 3 form a closed circuit in the state where the connection portion between third winding 23 and resonance capacitor 3 cannot be connected to the external circuit of transformer 10. The expression "the state where the connection portion between third winding 23 and resonance capacitor 3 cannot be connected to the external circuit of transformer 10" means that third winding 23 includes no connection terminal for connecting to the external circuit of transformer 10, for example. For example, the above-mentioned state means the state where at least the connection portion between third winding 23 and resonance capacitor 3 is not exposed to the outside of transformer 10, and cannot be visually seen by a person. Alternatively, for example, the above-mentioned state means the state where the connection portion between third winding 23 and resonance capacitor 3 is exposed to the outside of transformer 10, and a task for connecting an external circuit to the connection portion cannot be performed.

In the embodiment, substrate 5 to which conductive pattern 231 (third winding 23) and resonance capacitor 3 are attached is disposed within a space surrounded by first magnetic core 11 and second magnetic core 12. Thus, the connection portion between conductive pattern 231 and resonance capacitor 3 is not exposed to the outside of transformer 10.

As described above, first winding 21, second winding 22, and third winding 23 are wound around central leg portion 111 in first magnetic core 11 or central leg portion 121 in second magnetic core 12. Specifically, first winding 21, second winding 22, and third winding 23 are wound around at least one or more magnetic cores 1 among the plurality of magnetic cores 1. Thus, first winding 21 and second winding 22, second winding 22 and third winding 23, and first winding 21 and third winding 23 are mutually magnetically coupled.

In the embodiment, first winding 21 and second winding 22, second winding 22 and third winding 23, and first winding 21 and third winding 23 are mutually loosely magnetically coupled. For example, when the inductance is observed from one of the primary side or the secondary side in a state where the other thereof is short-circuited and the inductance has a significant value, it can be said that leakage inductance is present, and first winding 21 and second winding 22 are mutually loosely coupled.

In the embodiment, the coupling coefficient of first winding 21 and second winding 22, the coupling coefficient of second winding 22 and third winding 23, and the coupling coefficient of first winding 21 and third winding 23 are each less than 0.96. To be noted, the numeric value range of the coupling coefficient corresponding to mutual, loosely magnetic coupling between the windings is one example, and any other numeric value range can be defined.

### [Operation]

Hereinafter, an example of the operation of power supply device 100 according to the embodiment will be described. Prior to description of an example of the operation of power supply device 100 according to the embodiment, initially, the operation of power supply device 200 in Comparative Example will be described with reference to FIGs. 4 and 5. FIG. 4 is a circuit diagram illustrating a schematic configuration of power supply device 200 in Comparative Example. FIG. 5 is a diagram illustrating an equivalent circuit including transformer 300 in Comparative Example and two resonance capacitors 303 and 304.

In FIG. 5, "Lm1" represents a magnetizing inductance, "Lr11" represents the leakage inductance of first winding 301, and "Lr12" represents the leakage inductance of second winding 302. "C1" represents the capacitance of first resonance capacitor 303, and "C2" represents the capacitance of second resonance capacitor 304. In FIG. 5, illustration of winding resistance and stray capacity is omitted.

Unlike power supply device 100 according to the embodiment, power supply device 200 in Comparative Example includes transformer 300 in Comparative Example instead of transformer 10, and further includes first resonance capacitor 303 and second resonance capacitor 304. Hereinafter, description of the features shared with power supply device 100 according to the embodiment will be appropriately omitted.

Transformer 300 in Comparative Example includes first winding 301 connected to primary side circuit 41, and second winding 302 connected to secondary side circuit 42. Unlike transformer 10 according to the embodiment, transformer 300 in Comparative Example does not include third winding 23 and resonance capacitor 3. First winding 301 and second winding 302 are mutually loosely magnetically coupled.

First resonance capacitor 303 is connected to first winding 301 in series. First resonance capacitor 303 with the leakage inductance of first winding 301 forms a resonance circuit on the primary side (see the dashed line in FIG. 5). Second resonance capacitor 304 is connected to second winding 302 in series. Second resonance capacitor 304 with the leakage inductance of second winding 302 forms a resonance circuit on the secondary side (see the dotted line in FIG. 5).

As illustrated in FIG. 5, in power supply device 200 in Comparative Example, the leakage inductance of first winding 301 and first resonance capacitor 303 resonate and operate, for example, during motoring such as charging of the storage battery connected to secondary side circuit 42. As illustrated in FIG. 5, in power supply device 200 in Comparative Example, the leakage inductance of second winding 302 and second resonance capacitor 304 resonate and operate, for example, during regeneration such as discharging of the storage battery connected to secondary side circuit 42. Thus, in power supply device 200 in Comparative Example, in both of primary side circuit 41 and secondary side circuit 42, each of the switching elements can operate in a soft switching mode, leading to a reduction in switching loss and an improvement in efficiency.

However, in power supply device 200 in Comparative Example, the resonance capacitor should be disposed both on the primary side and on the secondary side, which leads to problems such as poor functionality and difficulties in reducing the size of the device.

In power supply device 200 in Comparative Example, in FIG. 4, during motoring, the leakage inductance of first winding 301 and first resonance capacitor 303 resonate and operate, causing a relatively high resonance voltage. The resonance voltage is also applied to transformer 300 in Comparative Example. Likewise, in power supply device 200 in Comparative Example, in FIG. 4, during regeneration, the leakage inductance of second winding 302 and second resonance capacitor 304 resonate and operate, causing a relatively high resonance voltage. The resonance voltage is also applied to transformer 300 in Comparative Example.

As described above, in power supply device 200 in Comparative Example, not only a relatively high voltage occurs in both ends of first resonance capacitor 303 and both ends of second resonance capacitor 304, but also a relatively high voltage occurs at both ends of the primary winding and both ends of the secondary winding in transformer 300 in Comparative Example. For this reason, in power supply device 200 in Comparative Example, a relatively high voltage occurs in transformer 300, the connection portion between primary side circuit 41 and first resonance capacitor 303, and the connection portion between secondary side circuit 42 and second resonance capacitor 304 in Comparative Example. This requires design of insulation which makes the device bearable to such a voltage, and leads to difficulties in reducing the size of the device.

Furthermore, the international standard IEC60664-4 specifies the clearance and the creepage when repeated voltage stress with a fundamental frequency of more than 30 kHz is received, and requires a longer distance for insulation as the frequency of the stress voltage and the voltage become higher. For this reason, in the case where switching elements Q1 to Q4 and Q5 to Q8 are driven at a high frequency to reduce the size of transformer 300 as a large part in power supply device 200 in Comparative Example, a relatively high voltage at a high frequency occurs in all of transformer 300, the connection portion between primary side circuit 41 and first resonance capacitor 303, and the connection portion between secondary side circuit 42 and second resonance capacitor 304 in Comparative Example. Thus, it is necessary to design a long clearance and creepage for these portions, which further leads to difficulties in reducing the size of the device.

In contrast, power supply device 100 according to the embodiment includes transformer 10 according to the embodiment, and thus can solve the above problem. Hereinafter, the operation of power supply device 100 according to the embodiment will be described with reference to FIG. 6. FIG. 6 is a diagram illustrating an equivalent circuit of transformer 10 according to the embodiment.

In FIG. 6, "Lm" represents a magnetizing inductance, "Lr1" represents the leakage inductance of first winding 21, "Lr2" represents the leakage inductance of second winding 22, and"Lr3" represents the leakage inductance of third winding 23. "C0" represents the capacitance of resonance capacitor 3. In FIG. 5, illustration of winding resistance and stray capacity is omitted.

As already described, third winding 23 is connected to resonance capacitor 3 in series within transformer 10 to form a closed circuit. For this reason, as illustrated in FIG. 6, the leakage inductance of third winding 23 and resonance capacitor 3 form a resonance circuit on the primary side (see the dashed line in FIG. 6), and form a resonance circuit on the secondary side (see the dotted line in FIG. 6).

In power supply device 100 according to the embodiment, as illustrated in FIG. 6, the leakage inductance of third winding 23 and resonance capacitor 3 resonate and operate, for example, during motoring such as charging of the storage battery connected to secondary side circuit 42. In power supply device 100 according to the embodiment, as illustrated in FIG. 6, the leakage inductance of third winding 23 and resonance capacitor 3 resonate and operate, for example, during regeneration such as discharging of the storage battery connected to secondary side circuit 42. Thus, in power supply device 100 according to the embodiment, in both of primary side circuit 41 and secondary side circuit 42, each of the switching elements can operate in a soft switching mode, leading to a reduction in switching loss and an improvement in efficiency.

Moreover, because in power supply device 100 according to the embodiment, it is unnecessary to dispose a resonance capacitor either on the primary side or on the secondary side and it suffices to dispose only one resonance capacitor 3 included in transformer 10, compared to power supply device 200 in Comparative Example, such a configuration facilitates an improvement in functionality, a reduction in size of the device, and a reduction in costs.

In power supply device 100 according to the embodiment, as illustrated in FIG. 1, a relatively high resonance voltage occurs in both cases of motoring and regeneration as a result of resonance operation of the leakage inductance of third winding 23 and resonance capacitor 3. Since the resonance voltage occurs within transformer 10, it is applied to neither primary side circuit 41 nor secondary side circuit 42.

FIG. 7 is a diagram illustrating the result of comparison between power supply device 100 according to the embodiment and power supply device 200 in Comparative Example. In FIG. 7, the ordinate represents the terminal voltage, and the abscissa represents the time. The terminal voltage is a primary voltage or secondary voltage of the transformer, and in other words, is a voltage applied to primary side circuit 41 or a voltage applied to secondary side circuit 42. In FIG. 7, the primary voltage of the transformer is indicated with the solid line, and the secondary voltage of the transformer is indicated with the dotted line. (a) of FIG. 7 is the waveform chart of the terminal voltage of power supply device 200 in Comparative Example, and (b) of FIG. 7 is the waveform chart of the terminal voltage of power supply device 100 according to the embodiment.

As illustrated in (a) of FIG. 7, in power supply device 200 in Comparative Example, the primary voltage of the transformer is a voltage of an AC voltage with an amplitude of about 400 V further superimposed on a resonance voltage of about 200 V. In power supply device 200 in Comparative Example, the secondary voltage of the transformer is a voltage of an AC voltage with an amplitude of about 200 V further superimposed on a resonance voltage of about 200 V.

As illustrated in (b) of FIG. 7, in contrast, in power supply device 100 according to the embodiment, the primary voltage of the transformer is an AC voltage with an amplitude of about 400 V, and the resonance voltage is not superimposed. In power supply device 100 according to the embodiment, the secondary voltage of the transformer is an AC voltage with an amplitude of about 200 V, and the resonance voltage is not superimposed.

As described above, because in power supply device 100 according to the embodiment, it is sufficient that design of insulation which makes the device bearable to a relatively high voltage is performed only on transformer 10, it is easy to reduce the size of the device. Accordingly, transformer 10 according to the embodiment is advantageous in that transformer 10 facilitates a reduction in size of power supply device 100 including transformer 10 to a size smaller than that of power supply device 200 in Comparative Example.

### (Other embodiments)

As above, transformer 10 and power supply device 100 according to the embodiment have been described, but the present disclosure is not limited to the embodiment. The present disclosure also covers a variety of modifications of the embodiment conceived by persons skilled in the art, and embodiments configured with a combination of components in different embodiments without departing from the gist of the present disclosure.

In the embodiment, as illustrated in FIG. 8, conductive pattern 231 (third winding 23) may be disposed inside substrate 5A. FIG. 8 is a cross-sectional view illustrating a schematic configuration of a modification of third winding 23.

Specifically, substrate 5A is a rectangular multi-layer printed circuit board, for example, and includes a through hole in the central portion thereof (not illustrated) as in substrate 5. Conductive pattern 231 is not formed on the surface of substrate 5A, but is formed in a layer located inside substrate 5A among a plurality of layers included in substrate 5A. The shape of substrate 5A and that of the through hole are not limited to a rectangular shape, and these can have any other shape such as a circular shape, for example.

In the above configuration, most of conductive pattern 231 (third winding 23) is covered with substrate 5A formed from a material having insulation properties, and thus this is advantageous in that the insulation distance to be ensured can be reduced.

In the above configuration, as illustrated in FIG. 9, resonance capacitor 3 may be disposed inside substrate 5A. FIG. 9 is a cross-sectional view illustrating a schematic configuration of a modification of third winding 23 and resonance capacitor 3. Specifically, resonance capacitor 3 is connected to the initial end and the terminal end of conductive pattern 231 in a layer located inside substrate 5A among a plurality of layers included in substrate 5A. In the above configuration, resonance capacitor 3 is covered with substrate 5A formed from a material having insulation properties, and thus this is advantageous in that the insulation distance to be ensured can be reduced.

In the above configuration, first winding 21 and second winding 22 may also be formed with a conductive pattern. For example, a conductive pattern of first winding 21 may be formed on one surface of substrate 5A in the thickness direction, and a conductive pattern of second winding 22 may be formed on the other surface of substrate 5A in the thickness direction.

In the embodiment, as illustrated in FIG. 10, for example, third winding 23 may be configured with conductive wire 232 wound around leg portions 111 and 121 of one magnetic core 1 among a plurality of magnetic cores 1. FIG. 10 is a diagram illustrating a schematic configuration of another modification of third winding 23 and resonance capacitor 3. In FIG. 10, illustration of magnetic core 1 is omitted. In this configuration, resonance capacitor 3 is connected to the initial end and the terminal end of conductive wire 232. Resonance capacitor 3 is a lead terminal-type capacitor, but is not limited to this. For example, a surface mount-type capacitor may be used. When resonance capacitor 3 is a surface mount-type capacitor, it is sufficient that a substrate for packaging the capacitor is further included.

Alternatively, as illustrated in FIG. 11, third winding 23 and resonance capacitor 3 may be covered with insulator 6 formed from a material having insulation properties. FIG. 11 is a diagram illustrating a schematic configuration of further another modification of third winding 23 and resonance capacitor 3.

Specifically, insulator 6 is formed into a cylindrical shape using a resin material having insulation properties. Insulator 6 includes circular through hole 61 penetrating in the axis direction (in the vertical direction in FIG. 11). Conductive wire 232 is spirally disposed around through hole 61.

In the embodiment, first magnetic core 11 and second magnetic core 12 form so-called EE cores, but any other configuration can be used. For example, a configuration illustrated in FIG. 12 can be used. FIG. 12 is a diagram illustrating a schematic configuration of a modification of a plurality of magnetic cores 1. For example, as illustrated in (a) of FIG. 12, first magnetic core 11 and second magnetic core 12 may form so-called EI cores. In this configuration, first magnetic core 11 includes three leg portions 111, and second magnetic core 12 is rod-shaped. Alternatively, as illustrated in (b) of FIG. 12, for example, first magnetic core 11 and second magnetic core 12 may form so-called EER cores. In this configuration, first magnetic core 11 includes three leg portions 111, in which central leg portion 111 is cylindrical. Second magnetic core 12 includes three leg portions 121, in which central leg portion 121 is cylindrical. Alternatively, as illustrated in (c) of FIG. 12, for example, first magnetic core 11 and second magnetic core 12 may form so-called PQ cores. In this configuration, first magnetic core 11 and second magnetic core 12 are each tapered from the outer leg portions toward the central leg portion premised on the configuration in (b) of FIG. 12.

In the embodiment, two magnetic cores 1 are included, but the number of magnetic cores is not limited to this. For example, three or more magnetic cores may be included as illustrated in FIG. 13, for example. FIG. 13 is a diagram illustrating schematic configurations of other modifications of a plurality of magnetic cores 1. For example, as illustrated in (a) of FIG. 13, a plurality of magnetic cores 1 may be three magnetic cores 1 forming so-called EE cores. In this configuration, a plurality of magnetic cores 1 further includes third magnetic core 13 in addition to first magnetic core 11 and second magnetic core 12. Alternatively, as illustrated in (b) of FIG. 13, for example, a plurality of magnetic cores 1 may be four magnetic cores 1 forming so-called EE cores. In this configuration, fourth magnetic core 14 is further included in addition to first magnetic core 11, second magnetic core 12, and third magnetic core 13. Alternatively, as illustrated in (c) of FIG. 13, for example, a plurality of magnetic cores 1 may be five magnetic cores 1 forming so-called EE cores. In this configuration, fifth magnetic core 15 is further included in addition to first magnetic core 11, second magnetic core 12, third magnetic core 13, and fourth magnetic core 14. This configuration includes two gaps G1.

Alternatively, as illustrated in (d) of FIG. 13 and (e) of FIG. 13, for example, a plurality of magnetic cores 1 may be three magnetic cores 1 forming so-called EE cores. The configurations illustrated in (d) of FIG. 13 and (e) of FIG. 13 each include two gaps G1.

In the embodiment, first winding 21 and second winding 22 are formed with a conductive wire wound around central leg portion 111 in first magnetic core 11 and central leg portion 121 in second magnetic core 12, respectively, but any other configuration can be used. For example, the configuration illustrated in FIG. 14 can be used. FIG. 14 is a diagram illustrating a schematic configuration of a modification of first winding 21 and second winding 22. In FIG. 14, first magnetic core 11 and second magnetic core 12 form so-called EI cores. For example, as illustrated in FIG. 14, first winding 21 and second winding 22 may be formed with a conductive wire wound around left and right leg portions 121, respectively, among three leg portions 121 of second magnetic core 12. In other words, first winding 21 and second winding 22 may be formed with a conductive wire wound around one of the leg portions. The same applies to third winding 23.

FIG. 15 is a cross-sectional view illustrating a schematic configuration of transformer 10A according to a first modification of the embodiment. Unlike transformer 10 according to the embodiment, transformer 10A according to the first modification further includes case 7. Hereinafter, in the description of transformer 10A according to the first modification, the features shared with transformer 10 according to the embodiment will be appropriately omitted.

Case 7 is formed from a metal, for example, and is shaped into a rectangular solid shape with a surface (here, the top surface in FIG. 15) opened. Case 7 accommodates a plurality of magnetic cores 1 (first magnetic core 11 and second magnetic core 12), first winding 21, second winding 22, third winding 23, and resonance capacitor 3. Case 7 is filled with resin 71 having heat conductivity.

In transformer 10A according to the first modification, a plurality of magnetic cores 1 and the like are covered with resin 71 having heat conductivity and are accommodated in case 7. Thus, heat dissipating properties of a plurality of magnetic cores 1 and the like can be improved. The insulation distance to be ensured can be reduced if resin 71 has high insulation properties.

FIG. 16 is a cross-sectional view illustrating a schematic configuration of transformer 10B according to a second modification of the embodiment. Unlike transformer 10A according to the first modification, in transformer 10B according to the second modification, first magnetic core 11 and second magnetic core 12 form so-called UU cores. Hereinafter, in the description of transformer 10B according to the second modification, the features shared with transformer 10A according to the first modification will be appropriately omitted.

First magnetic core 11 includes two leg portions 111, and is formed into a U shape in a cross-sectional view. Second magnetic core 12 includes two leg portions 121 as in first magnetic core 11, and is formed into a U shape in a cross-sectional view. Two leg portions 111 of first magnetic core 11 and two leg portions 121 of second magnetic core 12 are arranged to align with each other. Thus, in the second modification, first magnetic core 11 and second magnetic core 12 form so-called UU cores. Gap G1 is disposed between one of two leg portions 111 of first magnetic core 11 and one of two leg portions 121 of second magnetic core 12.

In the second modification, first winding 21 and third winding 23 are configured with a conductive wire wound around one of two leg portions 111 of first magnetic core 11 and one of two leg portions 121 of second magnetic core 12, respectively. Second winding 22 is configured with a conductive wire wound around the other of leg portions 111 of first magnetic core 11 and the other of leg portions 121 of second magnetic core 12.

In transformer 10B according to the second modification, a plurality of magnetic cores 1 may be configured as illustrated in FIG. 17. FIG. 17 is a cross-sectional view illustrating a schematic configuration of a modification of a plurality of magnetic cores 1. As illustrated in FIG. 17, first magnetic core 11 and second magnetic core 12 may form so-called UI cores. In this configuration, first magnetic core 11 includes two leg portions 111, and second magnetic core 12 is rod-shaped.

In the embodiment, first winding 21, second winding 22, and third winding 23 need not to be arranged vertically in this order as illustrated in FIG. 2, for example. In other words, it is sufficient that first winding 21, second winding 22, and third winding 23 are configured with a conductive wire wound around at least one or more magnetic cores 1 among a plurality of magnetic cores 1, and the arrangement of these windings is not particularly limited. For example, first winding 21 and second winding 22 may be arranged to be aligned in a horizontal direction, and third winding 23 may be disposed to be aligned with first winding 21 and second winding 22 in a vertical direction. Alternatively, for example, first winding 21, second winding 22, and third winding 23 may be arranged to be aligned in a horizontal direction.

In the embodiment, primary side circuit 41 and secondary side circuit 42 are both a full bridge circuit including four switching elements, but these circuits can have any other configuration. For example, at least one of primary side circuit 41 or secondary side circuit 42 may be a half-bridge circuit including two switching elements.

As described in the embodiment, power supply device 100 may be a unidirectional DC-to-DC converter. When power supply device 100 is a unidirectional DC-to-DC converter, one of primary side circuit 41 and secondary side circuit 42 may be a bridge circuit that converts a DC voltage to an AC voltage, and the other thereof may be a bridge circuit for rectification. The bridge circuit for rectification may be a diode bridge circuit, or may be a bridge circuit for synchronous rectification.

### (Summary)

As described above, transformers 10, 10A, and 10B according to a first aspect of the present disclosure are each a transformer used in unidirectional or bidirectional conversion of electric power, and each include a plurality of magnetic cores 1, first winding 21 connected to primary side circuit 41, second winding 22 connected to secondary side circuit 42, resonance capacitor 3, and third winding 23. Third winding 23 is connected to resonance capacitor 3 in series within transformer 10, 10A, or 10B to form a closed circuit. First winding 21, second winding 22, and third winding 23 are wound around one or more magnetic cores 1 among a plurality of magnetic cores 1.

This configuration facilitates a reduction in size of the device because it is unnecessary to dispose a resonance capacitor either on the primary side or the secondary side and it suffices to dispose only one resonance capacitor 3 included in transformer 10, 10A, or 10B. This configuration also facilitates a reduction in size of the device because it is sufficient that design of insulation which makes the device bearable to a relatively high voltage is performed only on transformer 10, 10A, or 10B. Accordingly, this configuration is advantageous in that the size of power supply device 100 including transformer 10, 10A, or 10B is easy to reduce.

Transformers 10, 10A, and 10B according to a second aspect of the present disclosure further include substrates 5 and 5A including through hole 51 that penetrates though the substrate in the thickness direction in the first aspect, respectively, leg portion 111 or 121 of one magnetic core 1 among the plurality of magnetic cores 1 being inserted into through hole 51. Third winding 23 is formed with conductive pattern 231 formed in substrates 5 and 5A.

This configuration is advantageous in that the region occupied by third winding 23 can be made smaller than that when third winding 23 is configured with a conductive wire wound around the leg portion of magnetic core 1.

In transformers 10, 10A, and 10B according to a third aspect of the present disclosure, in the second aspect, third winding 23 is disposed inside substrate 5A.

This configuration is advantageous in that the insulation distance to be ensured can be reduced because most of conductive pattern 231 (third winding 23) is covered with substrate 5A formed from a material having insulation properties.

In transformers 10, 10A, and 10B according to a fourth aspect of the present disclosure, in the third aspect, resonance capacitor 3 is disposed inside substrate 5A.

This configuration is advantageous in that the insulation distance to be ensured can be reduced because resonance capacitor 3 is covered with substrate 5A formed from a material having insulation properties.

In each of transformers 10, 10A, and 10B according to a fifth aspect of the present disclosure, in the first aspect, third winding 23 is configured with conductive wire 232 wound around leg portions 111 or 121 of one magnetic core 1 among the plurality of magnetic cores 1.

This configuration is advantageous in that third winding 23 is formed without preparing a substrate.

In transformers 10, 10A, and 10B according to a sixth aspect of the present disclosure, in any one of the first to fifth aspects, third winding 23 and resonance capacitor 3 are covered with a resin having insulation properties.

This configuration is advantageous in that the insulation distance to be ensured can be reduced because third winding 23 and resonance capacitor 3 are covered with a resin having insulation properties.

In transformers 10A and 10B according to a seventh aspect of the present disclosure, in any one of the first to sixth aspects, case 7 that accommodates the plurality of magnetic cores 1, first winding 21, second winding 22, third winding 23, and resonance capacitor 3 is further included. Case 7 is filled with resin 71 having heat conductivity.

This configuration is advantageous in that heat dissipating properties of the plurality of magnetic cores 1 and the like can be improved because the plurality of magnetic cores 1 and the like are covered with resin 71 having heat conductivity and are accommodated in case 7.

Power supply device 100 according to an eighth aspect of the present disclosure includes transformer 10, 10A, or 10B according to any one of the first to seventh aspects, primary side circuit 41 as a bridge circuit connected to first winding 21, and secondary side circuit 42 as a bridge circuit connected to second winding 22. At least one of primary side circuit 41 or secondary side circuit 42 includes a plurality of switching elements Q1 to Q8.

This configuration facilitates a reduction in size of the device because it is unnecessary to dispose a resonance capacitor on either the primary side or the secondary side and it suffices to dispose only one resonance capacitor 3 included in transformer 10, 10A, or 10B. This configuration also facilitates a reduction in size of the device because it is sufficient that design of insulation which makes the device bearable to a relatively high voltage is performed only on transformers 10, 10A, and 10B. Accordingly, this configuration is advantageous in that the size of power supply device 100 including transformer 10, 10A, or 10B is easy to reduce.

### [Industrial Applicability]

The present disclosure is useful in power supply devices and the like that increase or decrease predetermined voltage.

### [Reference Signs List]

1 magnetic core
11 first magnetic core
111 leg portion
12 second magnetic core
121 leg portion
13 third magnetic core
14 fourth magnetic core
15 fifth magnetic core
21 first winding
22 second winding
23 third winding
231 conductive pattern
232 conductive wire
3 resonance capacitor
41 primary side circuit
42 secondary side circuit
5, 5A substrate
51 through hole
6 insulator
61 through hole
7 case
71 resin
10, 10A, 10B transformer
100 power supply device
200 power supply device in Comparative Example
300 transformer in Comparative Example
301 first winding
302 second winding
303 first resonance capacitor
304 second resonance capacitor
G1 gap
Q1 to Q8 switching element

## Claims

1. A transformer used in unidirectional or bidirectional conversion of electric power, the transformer comprising:
a plurality of magnetic cores;
a first winding connected to a primary side circuit;
a second winding connected to a secondary side circuit;
a resonance capacitor; and
a third winding connected to the resonance capacitor in series within the transformer to form a closed circuit,
wherein the first winding, the second winding, and the third winding are wound around one or more magnetic cores among the plurality of magnetic cores.

2. The transformer according to claim 1, further comprising:
a substrate including a through hole that penetrates through the substrate in a thickness direction, a leg portion of one magnetic core among the plurality of magnetic cores being inserted into the through hole,
wherein the third winding is configured with a conductive pattern formed on the substrate.

3. The transformer according to claim 2,
wherein the third winding is disposed inside the substrate.

4. The transformer according to claim 3,
wherein the resonance capacitor is disposed inside the substrate.

5. The transformer according to claim 1,
wherein the third winding is configured with a conductive wire wound around a leg portion of one magnetic core among the plurality of magnetic cores.

6. The transformer according to any one of claims 1 to 5,
wherein the third winding and the resonance capacitor are covered with a resin having insulation properties.

7. The transformer according to any one of claims 1 to 5, further comprising:
a case that accommodates the plurality of magnetic cores, the first winding, the second winding, the third winding, and the resonance capacitor,
wherein the case is filled with a resin having heat conductivity.

8. A power supply device comprising:
the transformer according to any one of claims 1 to 5;
the primary side circuit as a bridge circuit connected to the first winding; and
the secondary side circuit as a bridge circuit connected to the second winding,
wherein at least one of the primary side circuit or the secondary side circuit includes a plurality of switching elements.
